Europäisches Patentamt

European Patent Office

Office européen des brevets

(11) Numéro de publication: **0 209 461**
**A1**

## DEMANDE DE BREVET EUROPEEN

(21) Numéro de dépôt: 86401558.1

(22) Date de dépôt: 11.07.86

(51) Int. Cl.⁴: **A47J 45/07**

(30) Priorité: 16.07.85 FR 8510874

(43) Date de publication de la demande:
21.01.87 Bulletin 87/04

(84) Etats contractants désignés:
AT BE CH DE GB IT LI LU NL SE

(71) Demandeur: **SITRAM Société Industrielle de Transformation des Métaux**

**F-36170 Saint-Benoit-du-Sault(FR)**

(72) Inventeur: **Tabuteau, Gérard Roussines**
**F-36170 Saint-Benoit-du-Sault(FR)**

(74) Mandataire: **Robert, Jean-Pierre et al CABINET BOETTCHER 23, rue la Boétie F-75008 Paris(FR)**

(54) **Poignée de casserole démontable.**

(57) L'invention concerne une poignée démontable pour casserole 1 munie d'un étrier 2 de fixation.

Selon l'invention, cette poignée est en deux parties 4 et 6 articulées l'une à l'autre autour d'un axe 7 entre deux positions dans lesquelles respectivement un ergot de fixation 8 solidaire de la partie 6 est engagé ou dégagé d'un étrier 2 placé dans un logement 5 de la partie 4, la position d'engagement étant verrouillée par un loquet 14 de la partie 6 coopérant avec une indentation 13 de la partie 4 lorsque ces deux parties sont dans l'alignement l'une de l'autre.

Application à l'industrie des appareils ménagers.

Fig. 1

EP 0 209 461 A1

Xerox Copy Centre

## Poignée de cassezole démontable.

On sait qu'il peut être utile de détacher la poignée de manutention d'une casserole du récipient lui-même. C'est notamment le cas lorsque l'on veut placer le récipient au four à une température qui détériorerait ladite poignée qui est généralement en matière synthétique ou en bois. C'est aussi le cas lorsque l'on veut soustraire le matériau de cette poignée à l'atmosphère agressive d'une machine à laver la vaisselle qui, à la longue détruit le matériau et fragilise son attache à la casserole.

Il existe, bien entendu, des poignées amovibles pour casseroles qui coopèrent avec le récipient au moyen d'une glissière (type queue d'aronde) prévue à l'extrémité de la poignée et une partie mâle correspondante prévue le long du bord du récipient. Ayant attelé la casserole à la poignée en glissant cette dernière de bas en haut sur la partie mâle jusqu'à être en butée, on peut manipuler la casserole au moins par basculement de 90° de part et d'autre de sa position normale. Au-delà il y a risque de découplement spontané. Outre cet inconvénient majeur, la qualité de l'accouplement n'est pas toujours satisfaisante : soit la glissière est encrassée et l'attelage glissant est mal réalisé et dangereux s'il est effectué sur un récipient chaud, soit l'ajustement du couplage devient de plus en plus lâche jusqu'à également présenter un danger à la manipulation.

On rappellera pour mémoire les manches agissant sur le récipient comme une pince nécessitant, outre l'effort à fournir pour le transport et la manipulation du récipient, de maintenir la pince constamment serrée et sous un effort qui peut varier brusquement selon l'inclinaison prise par le récipient lors d'un versement. On mentionnera enfin les manches ou poignées en forme d'épingle élastique dont les branches sont coudées perpendiculairement au plan de l'épingle et possèdent des extensions latérales que l'on rapproche pour introduire la poignée dans un étrier latéral du récipient. De tels dispositifs ne sont absolument pas sûrs du fait de leur instabilité en torsion autour de l'axe longitudinal de l'épingle.

La présente invention entend proposer une solution dans le domaine des poignées démontables qui donne plus grande satisfaction que les dispositifs existants, tant sur le point de la sécurité que celui de la résistance, la longévité, voire l'esthétique.

A cet effet donc, l'invention a pour objet une poignée de casserole démontable destinée à être fixée de manière amovible à un élément métallique, solidaire de la casserole, qui comporte au moins une paroi espacée du bord de la casserole et sensiblement parallèle à ce dernier, définissant avec ledit bord un espace intercalaire.

Selon l'une des caractéristiques principales de l'invention, cette poignée est constituée par deux parties articulées entre elles autour d'un axe transversal à sa dimension longitudinale et par des moyens d'encliquetage pour verrouiller entre elles les deux parties, dans au moins une position dans laquelle elles sont alignées, l'une des parties étant pourvue à son extrémité libre d'un logement pour recevoir l'élément métallique susdit, l'autre partie se prolongeant en direction de la première partie; au-delà de l'axe d'articulation par un levier comportant un ergot susceptible d'être logé dans l'espace intercalaire susdit lorsque les parties de poignée sont alignées. L'élément métallique susdit étant un étrier dont le fond constitue la paroi espacée susdite et dont les ailes sont soudées verticalement au bord de la casserole, l'axe transversal susdit est sensiblement horizontal lorsque ledit élément métallique est dans son logement de la poignée, l'ergot étant constitué par une lame de ressort de grande raideur pénétrant à l'intérieur de l'étrier par sa partie inférieure et prenant appui élastiquement sur la face interne du fond de l'étrier lorsque les deux parties de poignées sont alignées et verrouillées.

Dans un mode de réalisation préféré de l'invention, la lame de ressort susdite est en forme d'épingle dont la branche la plus proche de la paroi de fond de l'étrier est fixée audit levier et dont l'autre branche, sensiblement parallèle à la première, se termine au voisinage immédiat dudit levier pour y prendre appui dès que la flexion de la première branche dépasse une valeur donnée et constitue une butée de limitation de la déformation élastique dudit ergot.

En outre, les éléments de verrouillage susdits sont constitués par des surfaces de butée prévues en correspondance sur chacune des parties de poignée pour limiter dans un sens leur débattement relatif à la position dans laquelle elles sont alignées et par des surfaces de butée dont l'une est fixe sur la première partie et l'autre portée par un élément escamotable de la seconde partie, qui, placés en regard l'une de l'autre lorsque lesdites parties sont alignées, interdisent leur débattement relatif dans le sens opposé au sens susdit.

Il sera par ailleurs avantageux que l'élément escamotable susdit soit soumis à l'effet d'un organe élastique tendant à placer la surface de butée qu'il porte en regard de la butée fixe susdite.

Enfin, pour faciliter la mise en place et le retrait de la poignée au moyen d'une seule main notamment, la première partie de poignée comporte un crantage dans lequel peut tomber une partie de l'élément escamotable susdit de la seconde partie de poignée sous l'effet de l'organe élastique de rappel constituant un encliquetage de l'une des parties par rapport à l'autre dans une position relative angulaire telle que l'ergot susdit est complètement extérieur audit logement, la forme du crantage et de la partie d'élément associée permettant un désencliquetage des deux parties dès que la force qui tend à les aligner est supérieure à un seuil déterminé.

L'invention sera mieux comprise au cours de la description donnée ci-après d'un mode de réalisation, à titre d'exemple purement indicatif et non limitatif qui permettra d'en dégager les avantages et les caractéristiques secondaires.

Il sera fait référence aux dessins annexés dans lesquels :

-la figure 1 est une vue schématique de la poignée selon l'invention non attelée à la casserole;

-la figure 2 montre la poignée de la figure 1 dans sa configuration attelée à la casserole.

En se reportant à ces figures, on voit un bord latéral 1 d'une casserole partiellement représentée équipé d'un élément métallique 2 qui fait saillie à l'extérieur de la casserole. Classiquement, cet élément 2 est un étrier (pièce qui, vue du dessus, affecte la forme d'un U) dont les branches telles que 2a sont soudées verticalement à la paroi de la casserole de manière que le fond 2b de l'étrier, qui est sensiblement parallèle à ladite paroi, soit distant de celle-ci et qu'un espace intercalaire 3 existe entre les deux. Un tel élément est connu pour atteler de manière fixe une poignée à une casserole. L'un des premiers avantages de l'invention est de pouvoir produire, sur une même chaîne de fabrication, des casseroles pouvant indifféremment recevoir des poignées fixes ou des poignées amovibles.

La poignée selon l'invention comporte une première partie 4 dans laquelle est ménagé un logement 5, ouvert sur l'extérieur en 5a, en bout de partie 4, et en 5b dans sa partie inférieure. Les dimensions du logement sont sensiblement identiques à celle de l'étrier 2 afin notamment que la paroi 2b de ce dernier puisse être portée au contact du fond 5c du logement.

Par son autre extrémité, la partie 4 susdite est articulée à une seconde partie 6 autour d'un axe 7 sensiblement transversal à la dimension longitudinale de cette partie 6, qui constitue la pièce de préhension de la poignée prise en main par l'utilisateur.

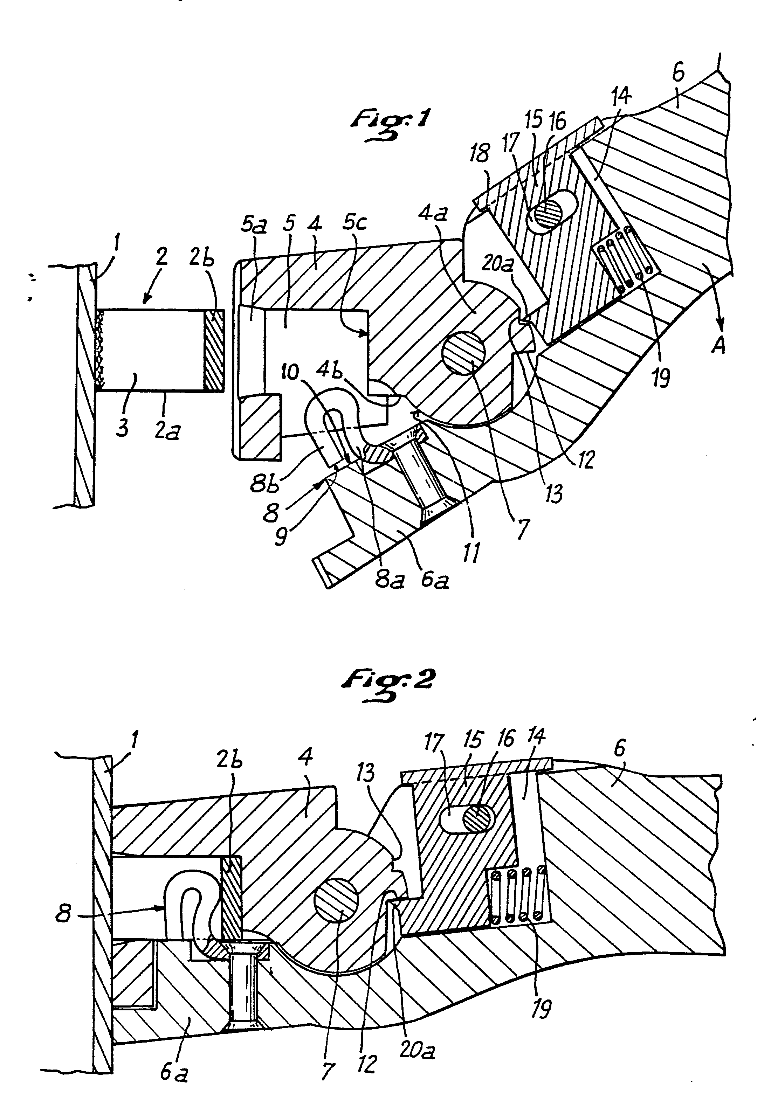

Cette partie 6 se prolonge, au-delà de l'axe 7, en direction de la partie 4 susdite par un bras de levier 6a, en une seule pièce avec la partie 6. Ce bras de levier 6a porte un ergot 8, s'étendant perpendiculairement au bras de levier et en direction du logement 5 dans lequel il peut pénétrer par l'ouverture 5b comme le montre la figure 2.

L'ergot 8 sera avantageusement constitué par une lame élastique conformée en épingle et dont une branche 8a, la plus proche du fond 5c du logement 5 est fixée (par rivetage notamment) au levier 6a, tandis que son autre branche 8b, sensiblement parallèle à la branche 8a, possède une extrémité 9 qui, à l'état libre, est très voisine d'une surface 10 d'appui correspondante portée par ledit levier.

Ainsi, après avoir introduit l'élément 2 dans le logement 5 alors que la poignée est dans sa configuration de la figure 1, on fait pivoter la partie 6 autour de l'axe 7, ce qui entraîne la pénétration de l'ergot 8 dans le logement 5 derrière la paroi de fond 2b de l'étrier 2. La distance séparant l'axe 7 de la branche 8a de l'étrier aura été calculée de manière telle qu'en fin de basculement de la partie 6,il se produise une légère déformation élastique de l'ergot assurant un "emmanchement" de l'ergot dans l'étrier légèrement résistant. On aura pris la précaution de choisir, pour réaliser l'ergot 8, une lame de ressort de grande raideur.

Il faut remarquer que la charge de la casserole sur la poignée tend à extraire l'étrier 2 de son logement, et donc tend à faire fléchir l'ergot. Le rôle de la branche 8b est de constituer une limite à cette flexion pour éviter que la liaison ne prenne du jeu, voire se détache sous la charge de la casserole. Ainsi, alors que le petit espace séparant l'extrémité 9 de la branche 8b de la surface d'appui 10 permet le fléchissement de l'ergot lors de son introduction dans l'étrier, une fois cette introduction réalisée ladite extrémité 9 porte normalement sur ladite surface 10 et aucune flexion n'est plus possible de la part de l'étrier, du moins sous l'effet de char ges correspondant au poids d'une casserole remplie. La liaison réalisée de cette manière ne peut donc pas prendre de jeu en charge.

Le verrouillage de la liaison est assuré de la manière suivante. On admettra que l'articulation des parties 4 et 6 entre elles autour de l'axe 7 est réalisée à la manière d'une chape, la portion 4a voisine de l'élément 4 de l'axe 7 étant disposée dans un logement bordé par deux ailes (non visibles sur les figures) de l'élément 6, l'axe 7 traversant cette portion 4a et ces deux ailes. Cette portion 4a affecte la forme au moins partielle d'un disque dont la surface cylindrique extérieure 11 est entaillée pour présenter une surface 12 sensiblement radiale et un crantage 13.

La partie 6 de poignée possède un évidement 14 en regard du disque 4a dans lequel est monté à coulissement un loquet 15 guidé par la paroi du logement 14 et une goupille 16 le traversant dans une lumière oblongue 17. Une surface 18 du loquet 15 est disposée en saillie par rapport à la surface supérieure de l'élément 6 pour permettre la manoeuvre du loquet, au moyen du pouce de la main tenant la poignée, à l'encontre d'un ressort de rappel 19 tendant à rapprocher le loquet de la partie 4. Sur sa face avant, le loquet 15 possède un ergot 20 qui porte une surface 20a sensiblement parallèle à la direction de coulissement. L'altitude de cette surface 20a sur le loquet est telle que, dans la position de la figure 2, cette dernière peut être placée sous la surface 12 du disque 4a.

On voit que par cette disposition, il n'est plus possible de faire tourner l'élément de poignée 6 dans un sens contraire au sens A susdit lorsque cette dernière est alignée avec la partie 4 (position de la figure 2). On notera par ailleurs que la poursuite de la rotation dans le sens A de la partie 6 de poignée est rendue impossible par le contact de la surface 10 du levier 6a avec une surface inférieure 4b de la partie 4 correspondante entourant l'ouverture 5b susdite.

Le retrait de la poignée nécessite une action sur le loquet 15 pour dégager la surface 20a de la surface 12.

On remarquera enfin que, comme illustré par la figure 1, l'ergot 20 peut pénétrer dans le crantage 13 susdit lorsque la poignée est "cassée" autour de son axe 7. Dans cette position, il se produit un encliquetage qui maintient les deux parties 4 et 6. L'ergot 8 est, dans ce cas, situé complètement à l'extérieur du logement 5 pour le libérer et permettre la libre introduction de l'étrier 2. La forme respective des surfaces du crantage 13 et de l'ergot 20 qui coopère lors de cet encliquetage est telle que, sous un effort modéré de manoeuvre dans le sens A de la partie 6, ce verrouillage saute de lui-même. Cette disposition est avantageuse en ce sens qu'elle permet de procéder au montage de la poignée d'une seule main.

L'invention trouve une application intéressante dans le domaine des articles ménagers.

Elle n'est pas limitée à la description qui vient d'en être donnée et dans laquelle le débattement relatif des deux parties de poignée s'effectue dans un plan radial de la casserole. Ce n'est pas sortir du cadre ni de l'esprit de l'invention que de concevoir une poignée dans laquelle l'axe d'articulation des parties qui la constituent soit parallèle à une génératrice de la casserole.

## Revendications

1. Poignée de casserole démontable destinée à être fixée de manière amovible à un élément métallique (2), solidaire de la casserole (1), qui comporte au moins une paroi (2b) espacée du bord de la casserole et sensiblement parallèle à ce dernier, définissant avec ledit bord un espace intercalaire (3), caractérisée en ce qu'elle est constituée par deux parties (4,6) articulées entre elles autour d'un axe transversal (7) à sa dimension longitudinale et par des moyens d'encliquetage (13, 14, 20) pour verrouiller entre elles les deux parties (4,6) dans au moins une position dans laquelle elles sont alignées, l'une des parties (4) étant pourvue à son extrémité libre d'un logement (5) pour recevoir l'élément métallique (2) susdit, l'autre partie (6) se prolongeant en direction de la première partie (4), au-delà de l'axe d'articulation (7), par un levier (6a) comportant un ergot (8) susceptible d'être logé dans l'espace intercalaire (3) susdit lorsque les parties de poignée sont alignées.

2. Poignée selon la revendication 1, caractérisée en ce que, l'élément métallique (2) étant un étrier dont le fond (2b) constitue la paroi espacée susdite et les ailes (2a) sont soudées verticalement au bord de la casserole (1), l'axe transversal (7) susdit est sensiblement horizontal lorsque ledit élément métallique (2) est dans son logement (5) de la poignée, l'ergot (8) étant constitué par une lame de ressort de grande raideur pénétrant à l'intérieur de l'étrier (2) par sa partie inférieure et prenant appui élastiquement sur la face interne du fond (2b) de l'étrier lorsque les deux parties (4,6) de poignée sont alignées et verrouillées.

3. Poignée selon la revendication 2, caractérisée en ce que la lame de ressort susdite est en forme d'épingle dont la branche (8a) la plus proche de la paroi de fond (2b) de l'étrier est fixée audit levier (6a) et dont l'autre branche (8b), sensiblement parallèle à la première se termine (9) au voisinage immédiat dudit levier (6a) pour y prendre appui dès que la flexion de la première branche (8a) dépasse une valeur donnée et constituer une butée de limitation de la déformation élastique dudit ergot (8).

4. Poignée selon l'une quelconque des revendications précédentes, caractérisée en ce que les éléments de verrouillage susdits sont constitués par des surfaces de butée (10, 4b) prévues en correspondance sur chacune des parties de poignée pour limiter dans un sens (A) leur débattement relatif à la position dans laquelle elles sont alignées et par des surfaces de butée (12, 20a) dont l'une (12) est fixe sur la première partie et l'autre portée (20a) par un élément escamotable (14) de la seconde partie, qui, placés en regard l'une de l'autre lorsque lesdites parties sont alignées, interdisent leur débattement relatif dans le sens opposé au sens (A) susdit.

5. Poignée selon la revendication 4, caractérisée en ce que l'élément escamotable (14) susdit est soumis à l'effet d'un organe (19) élastique tendant à placer la surface (20a) de butée qu'il porte en regard de la surface de butée fixe - (12) susdite.

6. Poignée selon la revendication 5, caractérisée en ce que la première partie (4) de poignée comporte un crantage (13) dans lequel peut tomber une partie (20) de l'élément escamotable (14) susdit de la seconde partie de poignée sous l'effet de l'organe élastique de rappel (19) constituant un encliquetage de l'une des parties - (6) par rapport à l'autre (4) dans une position relative angulaire telle que l'ergot (8) susdit est complètement extérieur audit logement (5), la forme du crantage (13) et de la partie d'élément (20) associée permettant un désencliquetage des deux parties dès que la force qui tend à les aligner est supérieure à un seuil déterminé.

*Fig. 1*

*Fig. 2*

## Office européen des brevets
# RAPPORT DE RECHERCHE EUROPEENNE
Numero de la demande

EP  86  40 1558

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl⁴) |
|---|---|---|---|
| A | US-A-1 364 552  (HILL)<br>* Figures 1,2 * | 1 | A 47 J   45/07 |
| A | FR-A-1 185 522  (COQUEVAL & CIE.)<br>* Figures 1-4 * | 1 | |
| A | FR-A-2 450 093  (EQUIPINOX) | | |
| A | FR-A-2 049 388  (EQUIPINOX) | | |

-----

DOMAINES TECHNIQUES
RECHERCHES (Int. Cl.4)

A 47 J

Le présent rapport de recherche a été établi pour toutes les revendications

| Lieu de la recherche | Date d'achèvement de la recherche | Examinateur |
|---|---|---|
| LA HAYE | 23-10-1986 | BEUGELING G.L.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82